# EUROPEAN PATENT APPLICATION

(11) **EP 1 775 420 A2**
(43) Date of publication of application: **18.04.2007**
(21) Application number: 06116953.8
(22) Date of filing: 11.07.2006
(51) Int. Cl.: F01D 5/18

(54) **Method of forming an airfoil having internal cooling passages**

(30) Priority: 11.10.2005 US 725991 P; 27.03.2006 US 390616
(71) Applicant: Honeywell International Inc., Morristown, New Jersey 07962 (US)
(72) Inventor: Morris, Mark C., Phoenix, AZ 85032 (US); Agarwal, Vivek, Chandler, AZ 85226 (US); Smoke, Jason C., Phoenix, AZ 85044 (US); Baker, William C, Phoenix, AZ 85020 (US); Tapia, Luis A., Tempe, AZ 85283 (US)
(74) Representative: Haley, Stephen

(57) **Abstract**

A method of forming an airfoil (104) having an internal cooling circuit (142), the internal cooling circuit including a flow path (130,132,134,136,138,140). An array of cylindrical pins (608) is formed on a selected portion of an outer surface of a core (600). Each pin (608) includes a top wall (614), a cylindrical side wall (616), and a chamfered edge (618) therebetween. The core (600) is shaped similarly to the internal cooling circuit (142), and the selected portion of the core (600) is shaped similarly to the flow path (130-140). The airfoil (104) is formed around the core (600) and the core (600) is removed from the airfoil (104) to expose a roughened surface comprising a plurality of cylindrical depressions (144,146) on a surface of the airfoil (104) from which the selected core portion is removed.
Each depression (144,146) includes a cylindrical sidewall (148) coupled to a bottom wall (150) by a chamfered edge (152) formed therebetween.

## Description

This application claims the benefit of U.S. Provisional Application No. 60/725,991, filed October 11, 2005.

This invention was made with Government support under DAAJ02-94-C-0030 awarded by the United States Army. The Government has certain rights in this invention.

The present invention relates to airfoil internal cooling circuits and, more particularly, to methods for forming a surface roughness on airfoil walls and structures that define an internal cooling passage.

Gas turbine engines, such as turbofan gas turbine engines, may be used to power various types of vehicles and systems, such as, for example, aircraft. Typically, these engines include turbine blades (or airfoils) that are impinged by high-energy compressed air that causes a turbine of the engine to rotate at a high speed. Consequently, the blades are subjected to high heat and stress loadings which, over time, may reduce their structural integrity.

Modern aircraft jet engines have employed internal cooling systems in the blades to maintain the blade temperatures within acceptable limits. Typically, the blades are air cooled using, for example, bleed air from a compressor section of the engine. The air may enter near the blade root, and then flow through a cooling circuit formed in the turbine blade. The cooling circuit typically consists of a series of connected passages that form serpentine paths, which increase the cooling effectiveness by extending the length of the air flow path.

In some cooling circuits, turbulator bumps, full or half pin fins, or other types of structured rougheners extend partially into the cooling circuit flow path to augment heat transfer from the blade to the cooling air. In some cases, however, the flow path may be extremely narrow and the structured rougheners may unintentionally choke the flow of air. As a result, a relatively large pressure drop may exist between two or more sections of the flow path, which may cause one or more areas of the blade to be insufficiently cooled. Moreover, producing structured rougheners on the inner surfaces of the blade may be relatively difficult. Specifically, because the paths may be relatively small and narrow, conventional techniques of forming turbulators as part of a core die, for example, by lost wax casting, may not produce suitably shaped features. Consequently the misshapen structures may unintentionally adversely affect the airflow through the flow path.

Hence, there is a need for a method of manufacturing a blade having an internal cooling circuit that sufficiently augments heat transfer and cools the airfoil using small cooling passages. It would be desirable for the method to be simple and relatively inexpensive to perform.

The present invention provides methods and apparatus for use in an airfoil. In another embodiment, and by way of example only, a method is provided of forming an airfoil having walls and structures extending therebetween that define an internal cooling circuit, where the internal cooling circuit includes a flow path. The method includes forming an array of cylindrical pins on a selected portion of an outer surface of a core, each pin includes a top wall, a cylindrical side wall, and a chamfered edge therebetween, the core shaped substantially similarly to the internal cooling circuit, and the selected portion of the core shaped substantially similarly to the flow path. Then, the airfoil is formed around the core. The core is removed from the airfoil to expose a roughened surface comprising a plurality of cylindrical depressions on a surface of the airfoil from which the selected core portion is removed, each depression including a cylindrical sidewall coupled to a bottom wall by a chamfered edge formed therebetween, and the roughened surface defining at least a portion of the flow path.

In another embodiment, by way of example only, the method includes determining a chamfering angle between a top wall and a side wall of a cylindrical pin to be formed in a core. Then an array of the cylindrical pins is formed on a selected portion of an outer surface of the core, where the core is shaped substantially similarly to the internal cooling circuit, and the selected portion of the core shaped substantially similarly to the flow path. The airfoil is formed around the core. The core is removed from the airfoil to expose a roughened surface comprising a plurality of cylindrical depressions on a surface of the airfoil from which the selected core portion is removed, each depression including a cylindrical wall coupled to a bottom wall by a chamfered edge formed therebetween, and the roughened surface defining at least a portion of the flow path.

In still another embodiment, by way of example only, air-cooled turbine blade is provided having an airfoil shape defined by a convex suction side wall, a concave pressure side wall, a leading edge, a trailing edge, a root and a tip, each wall including an interior surface that defines an interior with the edges, root and tip. The blade includes a plurality of independent cooling circuit flow paths within the blade interior and a roughened surface. The roughened surface is formed on an interior surface of at least one of the convex suction side wall and the concave pressure side wall, the roughened surface comprising a plurality of cylindrical depressions. Each depression includes a cylindrical wall coupled to a bottom wall by a chamfered edge formed therebetween, and the roughened surface defines at least a portion of one of the flow paths of the plurality of independent cooling circuit flow paths.

Other independent features and advantages of the preferred method will become apparent from the following detailed description, taken in conjunction with the accompanying drawings which illustrate, by way of example, the principles of the invention.

### In the Drawings;

FIG. 1 is an exemplary aircraft jet engine turbine rotor blade;

FIG. 2 is a cross section view of a portion of the blade shown in FIG. 1;

FIG. 3 is another cross section view of the blade taken along line 3-3 shown in FIG. 2;

FIG. 4 is a close up view of a portion of the blade shown in FIG. 2;

FIG. 5 is a flow diagram depicting an exemplary method for manufacturing the blade;

FIG. 6 is a perspective view of a portion of an exemplary core that may be used to manufacture the blade depicted in FIG. 1; and

FIG. 7 is a close up view of a portion of the core shown in FIG. 6.

The following detailed description of the invention is merely exemplary in nature and is not intended to limit the invention or the application and uses of the invention. Furthermore, there is no intention to be bound by any theory presented in the preceding background of the invention or the following detailed description of the invention.

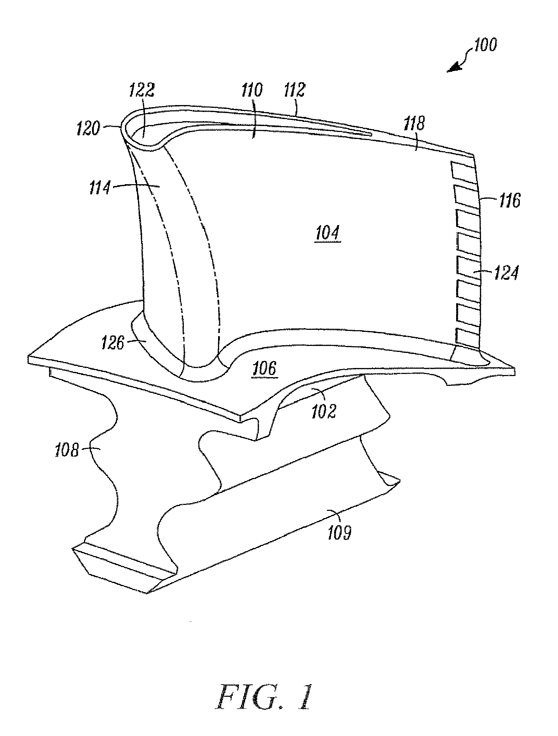

FIG. 1 illustrates an exemplary aircraft jet engine turbine rotor blade 100 that includes a shank 102, an airfoil 104, a platform 106 and a root 108. The platform 106 is configured to radially contain turbine airflow. The root 108 provides an area in which a firtree 109 is machined. The firtree 109 is used to attach the blade 100 to a turbine rotor disc (not illustrated). It will be appreciated that in other embodiments, any one of numerous other shapes suitable for attaching the blade 100 to the turbine disc, may be alternatively machined therein. The airfoil 104 has two outer walls 110, 112 each having outer surfaces that together define an airfoil shape. The airfoil shape includes a leading edge 114, a trailing edge 116, a pressure side 118 along the first outer wall 110, a suction side 120 along the second outer wall 112, a blade tip 122, a pressure side discharge trailing edge slot 124, and an airfoil platform fillet 126.

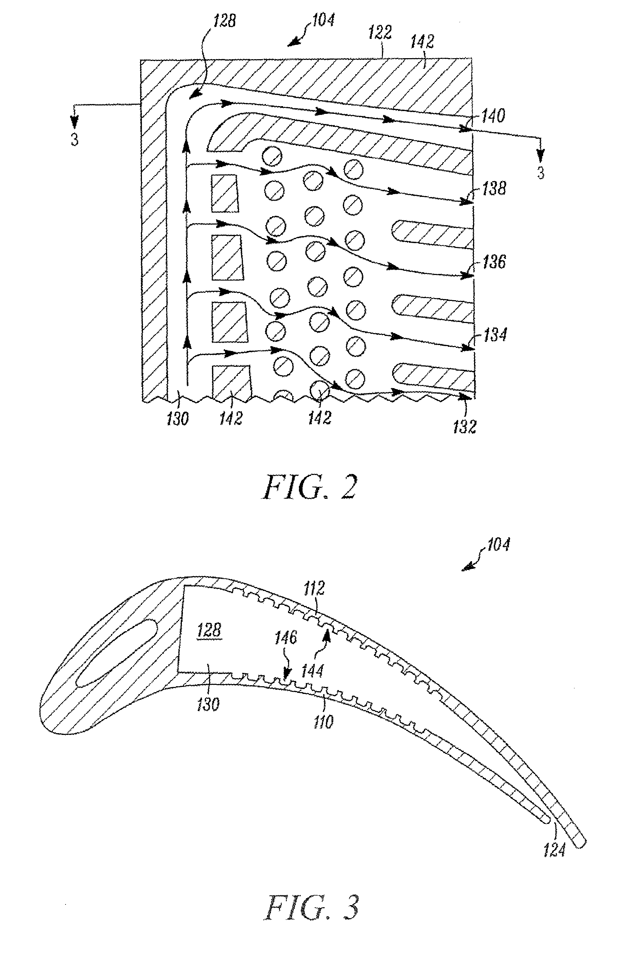

With reference now to FIGs. 2 and 3, cross sections of a portion of the airfoil 104 are shown. The airfoil 104 has an internal cooling circuit 128 which is made up of a plurality of flow paths 130, 132, 134, 136, 138, 140. The flow paths 130-140 are defined, in part, by the airfoil outer walls 110, 112, and other structures 142 that extend inwardly therefrom. At least one of the flow paths 130-140, preferably the flow path 140 adjacent the blade tip 122, is defined by structures 142 having an array of cylindrical depressions 144, 146. It will be appreciated that the flow paths 130-140 may be disposed in any suitable predetermined pattern, and may include any appropriate number. Moreover, although the flow paths 130-140 are shown in FIG. 2 as communicating with each other, the flow paths in other embodiments alternatively may not communicate with each other.

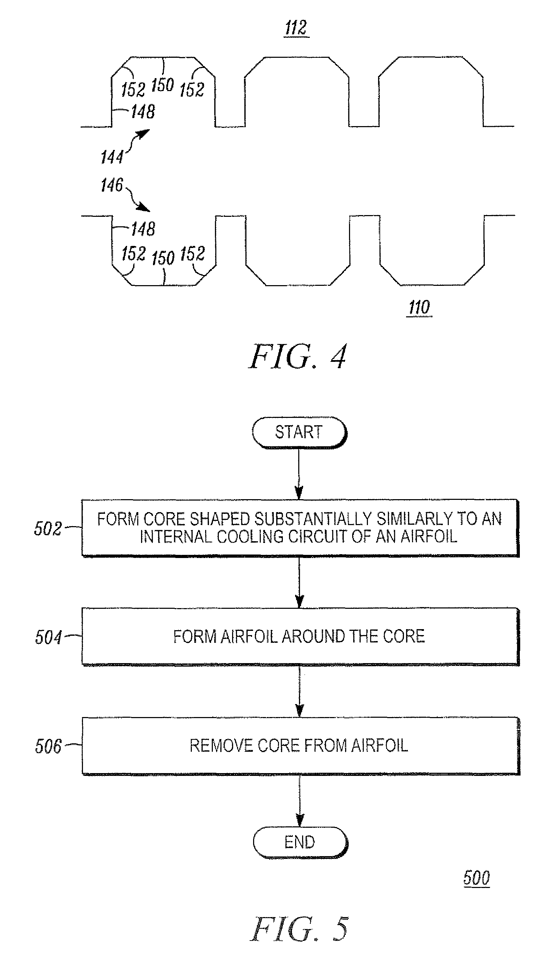

The array of cylindrical depressions 144, 146 are included on the structures 142 to enhance heat transfer from the airfoil walls 110, 112 to the cooling air traveling along the flow path 140. As can be seen in FIG. 4, each of the cylindrical depressions 144, 146 includes a cylindrical side wall 148, a bottom wall 150, and a chamfered edge 152 coupling the walls 148, 150 to one another. Although the depressions 144, 146 are each shown as being formed substantially perpendicular to the inner surfaces of the outer walls 110, 112, it will be appreciated and as will be explained below, the depressions 144, 146 may alternatively be formed at other predetermined angles relative thereto. As those skilled in the art will appreciate, an alternative embodiment for some applications may allow substitution of a fillet radius in place of the chamfered edge 152 to blend the cylindrical side wall 148 to the bottom wall 150.

The airfoil 104 depicted in FIGs. 1-3 is produced using an exemplary method 500 illustrated in FIG. 5. First, a core is formed that is shaped substantially similarly to the internal cooling circuit 128, step 502. The airfoil 104 is formed around the core, step 504. Then, the core is removed from the formed airfoil 104, step 506. Each of these steps will now be discussed in more detail below,

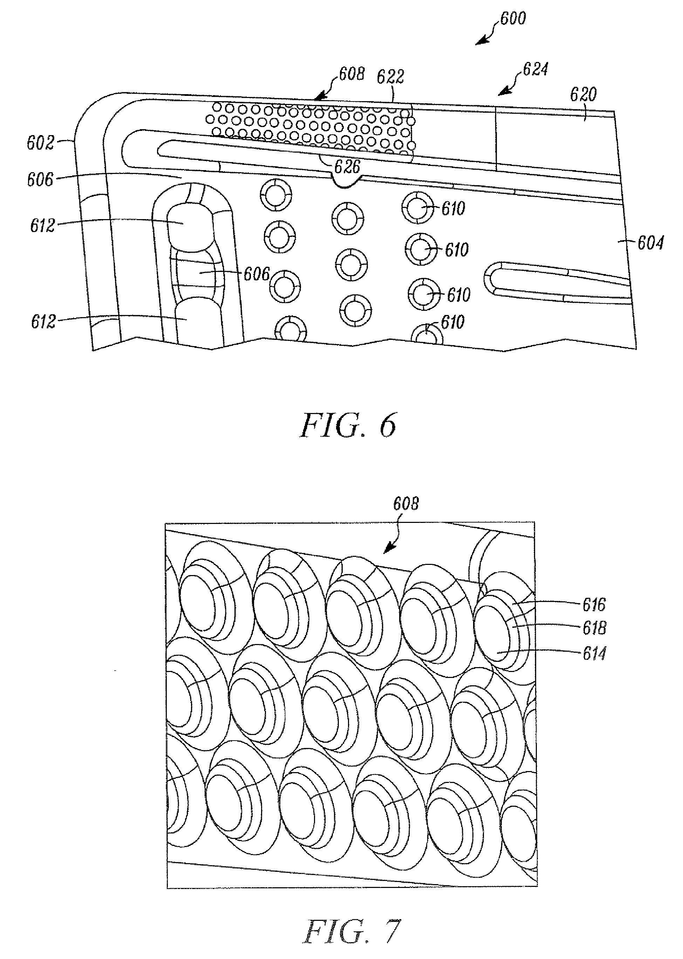

As briefly mentioned above, the core is first formed and is shaped substantially similarly to the airfoil internal cooling circuit, step 502. A portion of an exemplary core 600 and a close up view of the portion are illustrated in FIGs. 6 and 7. The core 600 includes a forward section 602, an aft section 604, a plurality of connectors 606 coupling the forward and aft sections 602, 604 together, and an array of cylindrical pins 608. With reference to both FIGs. 2 and 6, the forward section 602 forms flow paths 130 and 140, while the aft section 604 forms flow paths 132, 134, 136, and 138. The aft section 604 also includes a plurality of openings 610 in the core 600 that are later employed to form several of the structures 142. Spaces 612 between the connectors 606 also form several of the structures 142. The array of cylindrical pins 608 is used to form the cylindrical depressions 144, 146. As shown in FIG. 7, each pin 608 includes a top wall 614, a cylindrical side wall 616, and a chamfered edge 618 formed therebetween.

The core 600 is formed using a core die that is shaped substantially similar to the airfoil 104. The openings 610 and spaces 612 of the core 600 are formed in the core die as solid sections shaped to complement the openings 610 and spaces 612. The solid sections are formed in the core die using any one of numerous conventional manners. The cylindrical pins 608 of the core 600 are formed in a selected portion of the core 600 that will define a portion of the internal cooling circuit 128 having roughened surfaces. For example, as shown in FIG. 6, the pins 608 are formed in the portion of the forward section 602 that will form flow path 140. Although the pins 608 are illustrated as being formed on a first side 620 of the selected portion of the forward section 602, it will be appreciated that the pins 608 may additionally or alternatively be formed on a second side 624. Moreover, the pins 608 may additionally be formed on an inner portion 626 or an outer periphery 622 of the selected portion.

The cylindrical pins 608 are formed from a core die having complementary-shaped cylindrical depressions formed thereon. In one exemplary embodiment, the core die pull plane orientation of a selected flow path, in this example, flow path 140, is first determined. Then, desired dimensions of the cylindrical depressions 144, 146 of the airfoil 104 are designed. For example, diameters of the depressions 144, 146, depth of the depressions 144, 146 and a chamfering angle between the bottom wall 150 and the side wall 148 of the depression 144, 146 are calculated. Preferably, the chamfering angle is selected to provide a sufficient clearance between the core die and core 600 when the two are separated from each other to provide for successful removal of the core 600 from the core die. In another embodiment, the cylindrical sidewalls 148 of each depression 144, 146 are angled relative to the airfoil 104 surface to further ensure avoidance of die lock. It will be appreciated that the particular dimensions of each depression 144, 146 may be substantially identical, or alternatively, may differ.

After the dimensions are determined, the cylindrical depressions are formed in the core die using any one of numerous conventional methods. In one exemplary embodiment, the cylindrical depressions are end-milled into the core die. In another exemplary embodiment, the depressions are electro-discharge machined into the core die. Next, the suitably shaped core die is injected with a ceramic material to form the core 600. The core 600 is then removed from the core die and cured.

After the pins 608 are formed on the core 600, the airfoil is formed around the core 600, step 504. In one exemplary embodiment, the airfoil is formed using a lost wax casting process. In this regard, the core 600 is first placed in a wax pattern die. Wax is then injected around the core to produce a wax pattern of the turbine blade 100. The wax pattern is dipped in ceramic slurry and dried to form a mold. The mold is then heated until the wax melts. The wax is then removed from the mold, and the mold is placed in a furnace, heated, and filled with a metal material to produce a turbine blade casting. It will be appreciated that the metal material may be any one of numerous metal materials suitable for forming the blade 100. such, as, for example, nickel-based superalloys, which may be equi-axed, directionally solidified, or single crystal.

Then, after the metal material solidifies and the blade 100 is formed, the mold is removed from the blade outer surface and the core 600 is removed from the blade 100, step 506. Consequently, cavities are left in the blade 100 forming the internal cooling circuit 128 and the roughened surfaces of the walls 110, 112 and structures 142 are exposed. In one exemplary embodiment, the core 600 is chemically removed from the blade 100 using a suitably formulated composition that dissolves the core 600. Upon successful removal of the exterior mold, the core material is leached out using a traditional caustic solution, such as sodium or potassium hydroxide, as is common in the core removal industry. Verification of core removal may be accomplished using a combination of water flow, air flow, N-ray, and thermal imaging inspections.

It will be appreciated that as internal cooling circuit flow paths become smaller and smaller, fabricating cooling features therein becomes more difficult. For example, machining hemispherical depressions, which are typically formed by milling techniques using ball end cutters, either normal to or at an angle to a flow surface, may cause the cutters to chatter or walk along the surface to be machined. Consequently, the resulting depressions may not be formed correctly. Depressions having other shapes, such as a conical, may be easier to form than hemispherical depressions; however, they may not yield optimal cooling results. In particular, computational fluid dynamics analyses comparing the cylindrical chamfered depressions described above with conical depressions show that cylindrical chamfered depressions unexpectedly provide over 3% more heat transfer than conical depressions. Additionally, the cylindrical chamfered depressions are easier to manufacture, especially when a preferred diameter of the depression approaches 0.015 to 0.005 inches.

A new blade having improved cooling capabilities over conventionally shaped blades has been provided. Additionally, a method for forming the improved blade has also been provided. As mentioned above, the method may be used to form narrow flow paths and may be incorporated into existing manufacturing processes. Moreover, the method is relatively simple and inexpensive to implement.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method of forming an airfoil (104) having walls (120, 112) and structures (124) extending therebetween that define an internal cooling circuit (142), the internal cooling circuit including a flow path (130, 132, 134,136, 138, 140), the method comprising the steps of:
forming an array of cylindrical pins (608) on a selected portion of an outer surface of a core (600), each pin (608) includes a top wall (614), a cylindrical side wall (616), and a chamfered edge (618) therebetween, the core (600) shaped substantially similarly to the internal cooling circuit (142), and the selected portion of the core (600) shaped substantially similarly to the flow path (130-140);
forming the airfoil (104) around the core (600); and
removing the core (600) from the airfoil (104) to expose a roughened surface comprising a plurality of cylindrical depressions (144, 146) on a surface of the airfoil (104) from which the selected core portion is removed, each depression (144, 146) including a cylindrical sidewall (148) coupled to a bottom wall (150) by a chamfered edge (152) formed therebetween, and the roughened surface defining at least a portion of the flow path (130-140).

2. The method of claim 1, wherein the step of forming an array of cylindrical pins (608) includes the step of determining a chamfering angle between the top wall (614) and the side wall (616).

3. The method of claim 2, wherein the core (600) includes an outer surface and the cylindrical walls (148) of each cylindrical pin (608) is angled relative to the core outer surface.

4. The method of claim 1, wherein the step of forming an array of cylindrical pins (608) comprises:
forming a core die and end-milling depressions into the core die that have shapes that are complementary to the cylindrical pins (608); and
injecting the core die with ceramic material to form the core (600).

5. The method of claim 1, wherein the step of forming an array of cylindrical pins (608) comprises:
forming a core die and electro-discharge machining depressions into the core die that have shapes that are complementary to the cylindrical pins (608); and
injecting the core die with ceramic material to form the core (600).

6. The method of claim 1, wherein the step of forming the airfoil (104) around the core (600) comprises:
placing the core (600) in a wax die;
injecting wax around the core (600) and in the wax die to form a wax pattern of the airfoil (104);
contacting the wax pattern with ceramic slurry to form a mold;
removing the wax pattern from the ceramic mold;
depositing molten metal material into the mold and around the core (600); and
cooling the molten metal material to form the airfoil (104).

7. The method of claim 1, wherein the step of removing comprises chemically removing the core (600).

8. The method of claim 1, wherein the step of removing comprises physically removing the core (600).

9. The method of claim 1, wherein the airfoil (104) includes a tip portion (122) and the flow path (140) is disposed adjacent the tip portion (122).

10. The method of claim 1, further comprising forming the core (600) from ceramic material.
